Europäisches Patentamt

European Patent Office

Office européen des brevets

Publication number: **0 406 463 A1**

# EUROPEAN PATENT APPLICATION

(21) Application number: 89112285.5

(22) Date of filing: 05.07.89

(51) Int. Cl.⁵ **H01M 2/10, B60R 16/04**

(43) Date of publication of application:
**09.01.91 Bulletin 91/02**

(84) Designated Contracting States:
**AT BE CH DE ES FR GB GR IT LI LU NL SE**

(71) Applicant: **NESTE OY**
**Keilaniemi**
**SF-02150 Espoo(FI)**

(72) Inventor: **Kärnä, Toivo**
**Kuskintie 3**
**SF-06400 Porvoo(FI)**
Inventor: **Nieminen, Jukka-Pekka**
**Viertokuja 1 G 27**

**SF-06400 Porvoo(FI)**
Inventor: **Mäisti, Asko**
**Turkkurinkatu 30**
**SF-06100 Porvoo(FI)**
Inventor: **Kähönen, Hannu**
**Susitie 25 as 6**
**SF-00800 Helsinki(FI)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Fixing mechanism for storage battery.**

(57) The present invention concerns a fixing mechanism for fixing a storage battery (10) to a base. Said fixing mechanism comprises a footing part (20-28) to be rigidly fixed to said base (B) and loose from the battery (10), and locking members (16-19) pivotally mounted on said storage battery (10). The storage battery (10) is arranged to be detachably fastened with the aid of said locking members to said footing part (20-28) by means of rapid locking. The locking members (16-19) are pivotally mounted on the cover (12) of the storage battery (10), and carrying handles (16) have been produced therein, at which the storage battery (10) can be lifted from the footing part (20-28) when the locking members (16-19) are turned in the open-position. In addition, shields (17) have been produced in the locking members which protect the storage battery terminals (13) when the locking members (16-19) are turned in locking position.

FIG. 1

# FIXING MECHANISM FOR STORAGE BATTERY

The present invention concerns a fixing mechanism for a storage battery.

In designs known in the art the storage batteries, for instance starting batteries, have been fixed to a space reserved for said battery e.g. in the car engine space with separate fixing yokes or screw fixing. When using yoke fixing, said yokes have conventionally been pivoted at one end to the fastening base, and at the other end, they have been fixed with screws or equivalent. Said members have usually been carried over the storage battery. Another conventional fixing method is such in which the storage battery is at the bottom provided with lugs extending across the side walls of said storage battery, at which the storage battery is fixed on the lugs of the fastening base with responding fixing members and screw fixing. With said conventional fixing designs is related the essential disadvantage that detaching the storage battery from its fastening base and refastening it is cumbersome, and a separate tool is always needed for said purpose.

The object of the present invention is to provide a fixing mechanism for a storage battery with which mechanism the above drawbacks are avoided and a remarkable improvement is obtained with reference to said fixing mechanisms known in the art. For implementing said aim, the invention is mainly characterized in that the fixing mechanism comprises a footing part to be fastened rigidly to the base and separate from the storage battery, and locking parts pivotally attached to the storage battery, with which the storage battery is arranged to be detachably fixed to the footing part with quick locking.

The most significant advantage of the invention relative to the designs of prior art may be considered the idea that the mounting of a storage battery in place and detaching it therefrom has become extremely simple and easy with the invention, whereby the possibilities to use the storage battery are significantly wider than with designs known in the art because the storage battery is easy to detach e.g. for other use. A remarkable advantage from the manufacturing technological point of view is that independent of the application, the storage battery can be manufactured in the same way, whereby greater series than before can be achieved in storage battery manufacture. Therefore, requirements set by the application, for instance requirements being dependent on the make of the car, need no longer be considered in manufacturing storage batteries. Conforming to the application, and in particular to the fastening base, only the modifications required in the detached footing of the storage battery have to be carried out. The other advantages and characteristic features of the invention become obvious in the following detailed description of the invention, to which, however, the invention is not intended to be exclusively confined.

The invention is described in the following in detail referring to the figures of the drawing enclosed.

Fig. 1 presents the fixing mechanism of the storage battery in perspective view when the fixing mechanism is opened.

Fig. 2 presents the fixing mechanism and the storage battery in parallel view when said fixing mechanism is locked.

Fig. 3 corresponds to Fig. 2 viewed at the end of the storage battery and the battery, partly sectioned.

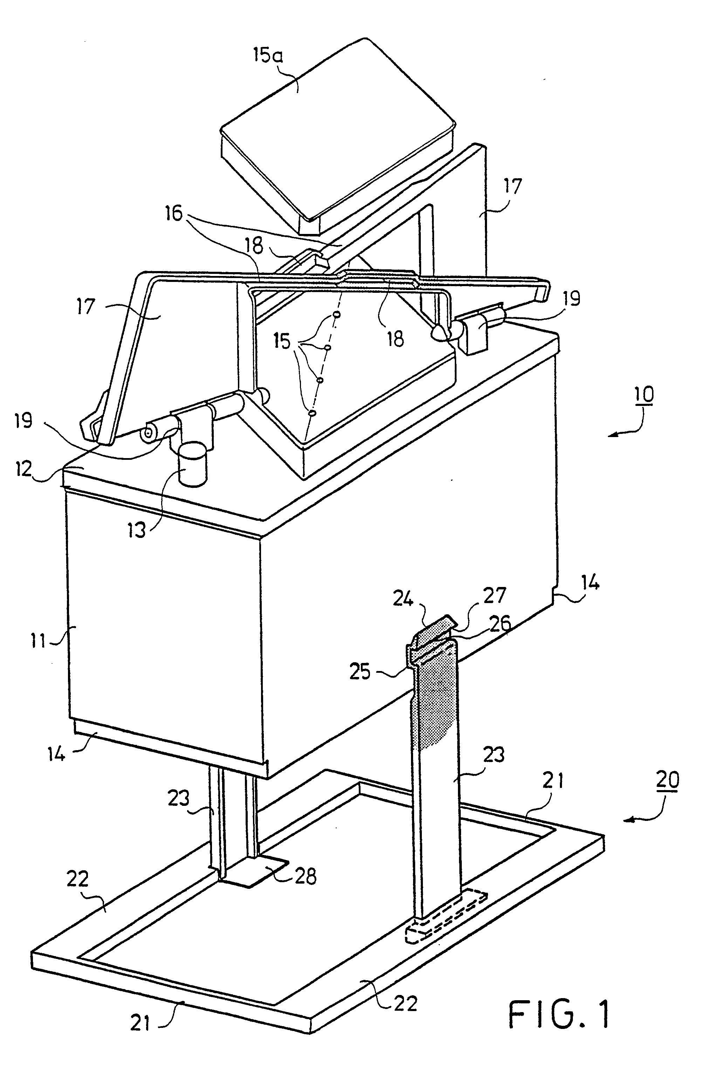

In the figures of the drawing, the storage battery is in general indicated by reference numeral 10. The storage battery 10 comprises a housing 11 surrounding the bottom and sides of said storage battery, said housing being closed with a cover 12 in the top part. The cover 12 of the storage battery is provided, as usual, with terminals 13 and acid-filling apertures 15 for the cells of the storage battery. The storage battery 10 moreover comprises a shield 15a for acid-filling apertures with which the acid-filling apertures 15 can be covered. On the cover 12 of the storage battery have been pivotally attached by means of articulates 19 the carrier handles 16 at which the storage battery can easily be lifted and carried. In the embodiment of Fig. 1 the carrier handles have been turned upwards into the carrying position. The carrying handles 16 act as one locking part of the fixing mechanism of the invention and therefore, locking gaps 18 have been produced in the carrier handles, their significance being described more in detail later. In addition, plate-like parts have been produced in the carrying handles 16, acting as the shields 17 of the storage battery terminals 13 when said carrying handles 16 are turned against the cover 12 of the storage battery in locking position.

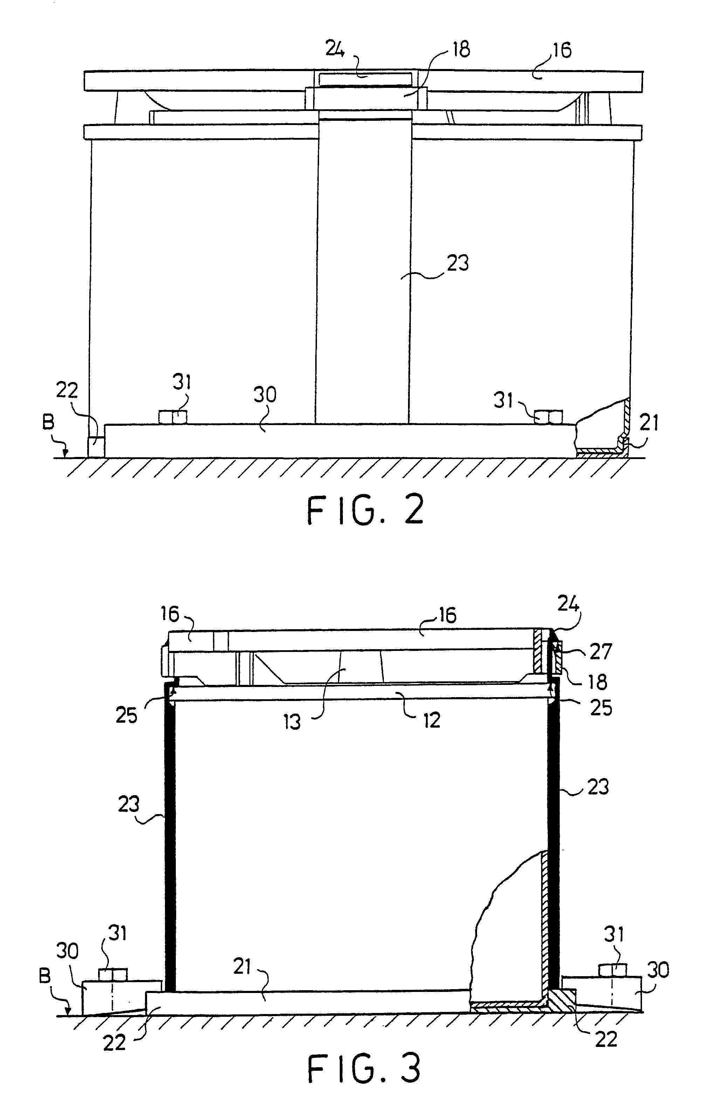

For fixing the storage battery 10 on the fixing base in its application use, the storage battery is provided with a footing separated from said storage battery 10, which in the figures of the drawing is in general indicated by reference numeral 20. The footing 20 comprises transversal edges 21 and longitudinal edges 22, defining an aperture therebetween into which the bottom of the storage battery 10 is intended to be fitted. In the embodiment of the figures, steps 14 have been produced in the lower part of the storage battery 10, in the corners between the battery bottom and the shorter end sides, to secure that the storage battery 10, when mounted on the footing 20, is directed into an appropriate position in said footing 20. When the storage battery 10 is mounted on said footing 20, the transversal edges 21 of the footing are located in said steps 14 located in the lower part of the storage battery. On the longitudinal edges 22 of the footing 20 have been fixed fixing yokes 23 directed upwards from said footing 20, wherebetween the storage battery 20 is intended to be mounted, as shown in the figures. The length of the fixing yokes 23 is slightly greater than the height of the storage battery 10 in that the tip 24 of the fixing yokes 23 will be located above the storage battery cover 12 when the storage battery 10 is mounted on the footing 20. In the fixing yokes 23 are produced the first lugs 25 facing he storage battery which, when storage battery 10 has been mounted on said footing 20, respond to the cover 12 of the storage battery. In addition, a transversal groove 26 is moreover produced below the tip 24, the upper part thereof being defined by another lug 27 directed away from the storage battery 10. The storage battery 10 is so fixed to the footing 20 between the fixing yokes 23 that the carrying handles 16 are turned from the position shown in Fig. 1 downwards to a position shown in Fig. 2 and 3 in that the tips 16 of the fixing yokes 23 enter the locking slots 18 located in said carrying handles 16 fitting in the grooves 26 of said fixing yokes. The first lugs 25 in the fixing yokes 23 therefore prevent the storage battery 10 from coming up from the footing 20, and on the other hand, the locking slots 18 in the carrying handles 16 secure that the fixing yokes 23 do not succeed in turning aside but remain in their locations. The first lugs 25 in the fixing yokes 23 therefore receive the main stresses· of the battery fixing, and the carrying handles 16 and especially the locking slots 18 therein merely secure that the fixing yokes remain in the right position.

It is furthermore presented in Fig. 1 that horizontal supports 28 are arranged at the fixing yokes 23 to be located under the bottom of the storage battery 10 when said battery is in place 20 on said footing. Said piece is merely an additional safety measure because the steps 14 in the corners between the transversal battery walls and the bottom secure the maintaining of the storage battery 10 in the proper position on the footing 20. The footing 20 is fixed to the base B in a manner equivalent to that of the conventional storage batteries which are provided with fixed footing. Therefore, fixing pieces 30, presented e.g. in Figs 2 and 3, can be used for said fixing, said pieces being tightened with screws 31 against the footing 20. The fixing pieces 30 press thus the footing 20 tightly against the base B, whereby the footing 20 is rigidly fixed on said base B, The storage battery 10 may, however, be easily detached from the footing 20 by turning the carrying handles 16 upwards into the position shown in Fig. 1, whereby the storage battery 10 can be lifted from the footing 20 e.g. by lifting at the carrying handles 16.

The invention is described before as example referring to the figures of the drawing attached. It is not intended therewith to confine the invention exclusively to concern the example presented in said figures, and a plurality of modifications are feasible within the scope of the inventive idea determined by the claims following below.

The present invention concerns a fixing mechanism for fixing a storage battery (10) to a base. Said fixing mechanism comprises a footing part (20-28) to be rigidly fixed to said base (B) and loose from the battery (10), and locking members (16-19) pivotally mounted on said storage battery (10). The storage battery (10) is arranged to be detachably fastened with the aid of said locking members to said footing part (20-28) by means of rapid locking. The locking members (16-19) are pivotally mounted on the cover (12) of the storage battery (10), and carrying handles (16) have been produced therein, at which the storage battery (10) can be lifted from the footing part (20-28) when the locking members (16-19) are turned in the open-position. In addition, shields (17) have been produced in the locking members which protect the storage battery terminals (13) when the locking members (16-19) are turned in locking position.

## Claims

1. A fixing mechanism for a storage battery for fixing said storage battery (10) to a base (B), characterized in that said fixing mechanism comprises a footing part (20-28) to be rigidly fastened on said base (B) and loose from the storage battery (10), and locking parts (16-19) pivotally attached to the storage battery (10) with which the storage battery (10) is arranged to detachably fixed to the footing part (20-28) with rapid locking.

2. Fixing mechanism according to claim 1, characterized in that the footing part (20-28) comprises substantially vertical fixing yokes (23) wherebetween the storage battery (10) is disposed to be mounted and on which fixing yokes (23) said locking parts (16-19) are disposed to be locked.

3. Fixing mechanism according to claim 2, characterized in that in the fixing yokes (23) have been produced fastening lugs (25) supported against the cover (12) of the storage battery, and locking grooves (26) for the locking members (16-19) mounted pivotally to the storage battery (10).

4. Fixing mechanism according to any one of the precceding claims, characterized in that said locking members (16-19) comprise locking slots (18) arranged to be locked in the locking grooves (26) of said fixing yokes (23), and to secure the maintaining of said fixing lugs (25) of said fixing yokes (23) against the storage battery cover (12).

5. Fixing mechanism according to any one of the precceding claim, characterized in that said locking members (16-19) are pivotally mounted on the cover (12) of the storage battery (10).

6. Fixing mechanism according to any one of the precceding claims, characterized in that in said locking members (16-19) have been produced carrying handles (16), at which the storage battery (10) can be lifted from the footing part (20-28) when the locking members (16-19) are turned to the open-position, and shields (17) for the storage battery terminals, shielding the storage battery terminals (13) when the locking members (16-19) are turned in locking position.

FIG.1

F I G. 2

F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 163 410 (CONTINENTAL GUMMI-WERKE AG) * Figures 1,2; column 2, line 30 - column 3, line 5 * | 1 | H 01 M 2/10 B 60 R 16/04 |
| X | DE-B-1 195 377 (CONTINENTAL GUMMI-WERKE AG) * Figure 2; column 3, line 37 - column 4, line 6 * | 1 | |
| A | US-A-1 542 821 (L.J. BOHANNON) * Figures 1-3; page 1, lines 66-106 * | 1 | |
| A | US-A-3 910 800 (C. GROBBY et al.) * Abstract * | 6 | |
| A | US-A-1 796 343 (R.M. PIERSON) * Figure 1, page 1, line 93 - page 2, line 10; page 2, lines 26-77 * | 1 | |
| A | US-A-1 465 660 (F.G. ALBORN) * Figures 4-5; page 1, lines 70-82 * | | TECHNICAL FIELDS SEARCHED (Int. Cl.5) |
| A | SOVIET INVENTIONS ILLUSTRATED; Section P/9, week E27, 18th August 1982, Derwent Publications Ltd, London, GB * Class P/9 no. J1331 E/27 * & SU-A-863 439 (BUS. CONS. CONS. INST.) | | H 01 M B 60 R B 60 K |

The present search report has been drawn up for all claims

| Place of search | Date of completion of the search | Examiner |
|---|---|---|
| THE HAGUE | 02-03-1990 | D'HONDT J.W. |